(19) Europäisches Patentamt
European Patent Office
Office européen des brevets

(11) Numéro de publication: **0 067 741**
**B1**

(12) **FASCICULE DE BREVET EUROPEEN**

(45) Date de publication du fascicule du brevet: **17.09.86**

(51) Int. Cl.⁴: **C 01 B 33/158**, B 01 J 13/00, C 03 C 3/04, E 04 B 1/74

(21) Numéro de dépôt: **82400945.0**

(22) Date de dépôt: **24.05.82**

(54) **Préparation d'aérogels de silice monolithiques, aérogels ainsi obtenus et leur utilisation pour la préparation d'articles en verre de silice et de matériaux thermiquement isolants.**

(30) Priorité: **04.06.81 FR 8111089**

(43) Date de publication de la demande: **22.12.82 Bulletin 82/51**

(45) Mention de la délivrance du brevet: **17.09.86 Bulletin 86/38**

(84) Etats contractants désignés: **CH DE FR GB LI NL**

(56) Documents cités:
**EP-A-0 018 955**
**EP-A-0 029 590**
**FR-A-2 037 835**
**GB-A-1 247 673**
**US-A-3 434 912**

(73) Titulaire: **Zarzycki, Jerzy Wojciech, 102, Impasse des Saules Le Belvédère Saint-Clément la Rivière, F-34980 St. Gely du Fesc (FR)**
Titulaire: **Prassas, Michel, 1216 S.W. 2nd Av. No. 35, Gainesville Florida 32601 (US)**
Titulaire: **Phalippou, Jean Emile Henri, 203, Route de Mende "Lou Garrigou" Montferrier, F-34980 St. Gely du Fesc (FR)**

(72) Inventeur: **Zarzycki, Jerzy Wojciech, 102, Impasse des Saules Le Belvédère Saint-Clément la Rivière, F-34980 St. Gely du Fesc (FR)**
Inventeur: **Prassas, Michel, 1216 S.W. 2nd Av. No. 35, Gainesville Florida 32601 (US)**
Inventeur: **Phalippou, Jean Emile Henri, 203, Route de Mende "Lou Garrigou" Montferrier, F-34980 St. Gely du Fesc (FR)**

(74) Mandataire: **de Boisse, Louis, CABINET DE BOISSE 37, Avenue Franklin D. Roosevelt, F-75008 Paris (FR)**

**EP 0 067 741 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne la préparation d'aérogels monolithiques à base de silice, les aérogels ainsi obtenus et leurs utilisation pour la production d'articles en verre de silice.

Il est déjà connu de préparer des aérogels de silice par séchage dans des conditions hypercritiques d'alcogels de silice, l'alcogel étant préparé en remplaçant par un alcool, tel que le méthanol, l'eau contenue dans un hydrogel préalablement lavé (voir le brevet français N° 1 544 835).

En tant que perfectionnement au procédé précédent, on a proposé de dissoudre dans un alcool, tel que le méthanol, un composé de silicium hydrolysable, tel que l'orthosilicate de méthyle, donnant par hydrolyse des produits volatils, d'ajouter de l'eau pour hydrolyser ledit composé, puis d'opérer le séchage dans des conditions hypercritiques (voir le brevet français N° 1 568 817).

Le brevet français N° 1 587 066 décrit la préparation d'aérogels d'oxydes minéraux, par exemple d'oxydes de Zr, Ti ou Al, par hydrolyse d'un alcoolate métallique dans un milieu non homogène, puis séchage dans des conditions hypercritiques.

Par ailleurs, le brevet français N° 2 050 725 décrit la préparation d'aérogels d'oxydes minéraux mixtes par hydrolyse simultanée d'au moins deux dérivés métalliques hydrolysables dans un milieu organique, puis par élimination du solvant dans des conditions hypercritiques. Toutefois, ce brevet ne décrit pas spécifiquement d'aérogels mixtes contenant de la silice en tant que constituant.

Les trois brevets précités ont trait à la préparation d'aérogels d'oxydes minéraux à partir de compositions composé organométallique hydrolysable/solvant contenant une proportion relativement faible de dérivé métallique, ne dépassant pas 30% en poids, la plupart des exemples donnés faisant usage d'une proportion de dérivés métalliques hydrolysables de 20% en poids au maximum.

Ces brevets ne sont pas très explicites sur la forme sous laquelle sont obtenus les aérogels. Seul le brevet français 1 587 066 indique que les aérogels obtenus présentent un état de division extrême. En tout cas, il n'est jamais question dans ces brevets antérieurs de l'obtention d'un aérogel monolithique de taille notable exempt de fissures et craquelures.

Plus récemment, on a décrit dans la demande de brevet européen publiée N° 18 955 un procédé de préparation d'un aérogel de silice sous la forme d'un bloc exempt de craquelures, de préférence transparent, par séchage dans des conditions hypercritiques d'un alcogel de silice préparé par hydrolyse d'un ester d'acide silicique dissous dans un solvant, qui se caractérise en ce que l'hydrolyse est effectuée à une température n'excédant pas la température ambiante, en ce que le gel de silice résultant est vieilli et lavé avec du solvant, et en ce que le traitement de séchage hypercritique dure au moins 24 heures. Ce procédé est très lent à mettre en œuvre, le vieillissement durant 2 à 26 jours, de préférence 10 jours, l'opération de lavage durant également plusieurs jours et le chauffage de l'alcogel dans l'autoclave pour atteindre les conditions hypercritiques étant effectué très graduellement, à une vitesse ne dépassant pas 25 °C/heure, de préférence de 10 à 15 °C/heure. Il s'agit donc d'un procédé peu adapté aux réalités industrielles et aux impératifs économiques. En outre, en raison de la nécessité d'une étape de lavage, ce procédé ne convient pas à la production d'aérogels mixtes.

On connaît aussi, par EP-A-29 590, un procédé de production de verre optique par frittage d'un corps formé d'un gel sec exempt de fissures, produit en séchant graduellement par chauffage un gel de silice dans un récipient ayant une surface intérieure non-mouillable par la solution ayant servi à préparer le gel. Le gel sec obtenu diffère de l'aérogel de l'invention en ce qu'il est un xérogel.

L'invention a pour objet de fournir un nouveau procédé de préparation d'aérogels de silice monolithiques exempts de craquelures et fissures, qui est d'une mise en œuvre simplifiée et plus rapide par rapport à celle du procédé décrit dans la demande de brevet européen N° 18 955 susmentionnée.

Plus particulièrement, l'invention concerne un procédé de préparation, tel que défini dans la revendication 1 ci-après, d'un aérogel de silice, monolithique, exempt de fissures et craquelures et ayant au moins une de ses dimensions supérieures à 10 cm.

L'aérogel peut être obtenu sous forme d'un corps monolithique exempt de craquelures et fissures dont au moins l'une des dimensions excède 10 cm, et cela d'une manière reproductible.

De préférence, le composé du silicium est présent à raison de 50 à 70% en volume.

L'invention concerne, en outre, l'utilisation de ces aérogels de silice monolithiques pour la préparation de verre de silice et de matériaux expansés thermiquement isolants.

Le composé du silicium hydrolysable peut être notamment un alcoolate de silicium dérivant d'un alcool inférieur. On préfère tout particulièrement, d'un point de vue pratique, l'orthosilicate de méthyle $Si(OCH_3)_4$ appelé aussi tétraméthoxysilane. On peut aussi utiliser du tétraéthoxysilane.

Le solvant non aqueux sera généralement constitué de l'alcool correspondant à l'alcoolate utilisé. On préfère utiliser tout particulièrement du méthanol avec le tétraméthoxysilane préféré. Avec le tétraéthoxysilane, on utilisera, de préférence, de l'éthanol.

Par l'expression «aérogel de silice», on désigne aussi bien les aérogels contenant de la silice comme seul oxyde minéral que les aérogels contenant, à côté de la silice comme oxyde minéral principal, au moins un autre oxyde minéral en proportion mineure. Des exemples de tels autres oxydes minéraux sont $B_2O_3$, $TiO_2$ et $Al_2O_3 \cdot B_2O_3$, $TiO_2$ et $Al_2O_3$ peuvent être obtenus, par exemple par hydrolyse d'alcoolates de B, de Ti ou d'Al, tels que $B(OCH_3)_3$, $Ti(OC_2H_5)_4$ et Al(sec-butoxyde)$_3$.

Les opérations de dissolution, d'hydrolyse et de polycondensation peuvent s'effectuer de diverses manières: On peut, par exemple, préparer un gel en agitant du $Si(OCH_3)_4$ dans du méthanol puis en hydrolysant la solution obtenue par addition d'eau et agitation à la température ambiante pendant 15 minutes à 1 heure environ. Dans le cas où le mélange $Si(OCH_3)_4$/méthanol/eau présente une immiscibilité (séparation de phases), ce qui peut se produire pour les mélanges gélifiants à haute teneur en $Si(OCH_3)_4$, on peut chauffer le mélange gélifiable, par exemple à 40–60 °C pendant l'agitation pour faire disparaître l'immiscibilité et obtenir le caractère homogène requis.

Selon une varainte, au lieu d'utiliser de l'eau pour l'hydrolyse, on emploie une solution diluée d'ammoniaque, par exemple 0,001 à 0,1 N, afin de faciliter ladite hydrolyse.

Il est parfois utile, mais pas indispensable avant l'introduction du mélange gélifiant (ou déjà gélifié) dans l'autoclave, de le laisser vieillir pendant des périodes allant de 1 à 1000 heures, de préférence d'au moins 20 heures. Ce vieillissement, qui a pour effet de rigidifier le réseau de silice et de faciliter ainsi l'obtention d'aérogels monolithiques, peut être effectué à une température supérieure ou égale à la température ambiante, le mélange gélifiant ou déjà gélifié étant disposé dans un récipient étanche sous la pression autogène de vapeur alcoolique. Le gel obtenu peut demeurer indéfiniment sous sa forme monolithique si le gel est conservé sous pression alcoolique. Un vieillissement est surtout utile dans le cas de la préparation d'aérogels mixtes.

L'opération de vieillissement peut aussi être effectuée à l'intérieur de l'autoclave. On peut par exemple prévoir des paliers de température entre 40 et 120 °C pendant des périodes variables avant de continuer la chauffe de l'autoclave en vue de sécher le gel.

Le séchage du gel est effectué dans un autoclave dans des conditions hypercritiques pour le solvant présent. Ce solvant est constitué non seulement du solvant non aqueux utilisé (le plus souvent du méthanol) mais aussi de l'eau résiduelle présente. Les conditions critiques pour le méthanol sont TC = 240 °C et $P_c$ = 79,7 bars. En pratique, la température à laquelle on procède à l'évacuation du solvant est fonction du pourcentage d'eau par rapport au solvant non aqueux total présent dans l'autoclave au moment de l'évacuation. Ce solvant non aqueux total est égal à la somme du solvant additionnel introduit dans l'autoclave, plus le solvant contenu dans le gel, plus le solvant produit lors de l'hydrolyse et de la polycondensation. La température d'évacuation est égale à 265 °C environ lorsque le pourcentage d'eau est égal à 15% en poids par rapport au méthanol total.

En pratique, on a trouvé qu'une gamme de températures allant de 265 à 275 °C convenait dans la plupart des cas lorsque le solvant non aqueux employé était du méthanol. Ces températures correspondent à des pressions de l'ordre de 180 à 200 bars. Dans ces conditions, l'élimination du solvant est effectuée lentement, de façon sensiblement isotherme. Couramment, l'élimination du solvant prend de 2 à 5 heures.

Le chauffage de l'autoclave peut être réalisé à une vitesse d'au moins 50 °C/heure sans que cela provoque des craquelures. Une vitesse de l'ordre de 100 °C/heure est préférée.

Afin de pouvoir obtenir des corps monolithiques de taille importante, exempt de craquelures ou fissures, les Demandeurs ont trouvé que plusieurs paramètres étaient importants:

a) la proportion de composé du silicium (tétraméthoxysilane) dans la solution de départ doit être d'au moins 40% en volume car en dessous d'une proportion de 40% en volume la préparation de corps monolithiques de grande taille exempts de craquelures ou fissures d'avère difficile et, de plus, les corps obtenus ne se prêtent pas à la production d'articles en verre de silice.

De préférence, la proportion de composé du silicium est comprise entre 50 et 70% en volume car c'est dans cette gamme que la préparation des monolithes est la plus aisée et que les monolithes conviennent le mieux pour la production d'articles en verre de silice. Au-dessus de 70% en volume, les problèmes d'immiscibilité deviennent difficiles à surmonter;

b) pour être sûr de ne pas couper la courbe d'équilibre liquide/vapeur du solvant lors de l'établissement des conditions hypercritiques, il faut veiller à ce que le volume massique $V_M$ défini par la relation:

$$V_M = \frac{\text{volume utile interne de l'autoclave dans les conditions critiques}}{\text{masse de solvant additionnel + masse de solvant dans le gel}}$$

soit inférieur à 6,5 $cm^3\ g^{-1}$, dans le cas d'un gel de silice simple et du système tétraméthoxysilane/méthanol. De préférence, $V_M$ est compris entre 3 et 4 $cm^3\ g^{-1}$;

c) un autre paramètre important à prendre en considération pour l'obtention de monolithes d'aérogels exempts de fissures ou craquelures est le rapport r du nombre de moles d'eau par mole de composé du silicium.

La réaction d'hydrolyse étant:

$Si(OCH_3)_4 + 4H_2O \rightarrow Si(OH)_4 + 4\ CH_3OH$ (1),

on a une quantité stoechiométrique d'eau lorsque r = 4. L'expérience a montré que r ne devait pas excéder certaines limites, qui sont fonction de la proportion de composé du silicium dans la solution de départ, si l'on voulait opérer dans les conditions les plus faciles. Une discussion détaillée de l'influence du rapport r est donnée dans l'exemple 6. Pour une proportion préférée du composé du silicium comprise entre 50 et 70%, un rapport r compris dans la gamme de 4 à 5 donne de bons résultats.

Après élimination du solvant et retour de l'autoclave à la pression atmosphérique, on purge l'autoclave de tout solvant résiduel, par exemple avec un gaz inerte sec, tel que de l'argon, pendant une brève période, par exemple pendant 15 min. Le chauffage du four est alors arrêté et l'aérogel est

retiré de l'autoclave après retour de l'autoclave à la température ambiante. Il faut veiller à éviter toute condensation d'eau provenant de l'air ambiant. Ceci peut être obtenu, par exemple, en isolant l'autoclave de l'extérieur ou en le balayant avec un gaz sec, comme de l'air sec, pendant le refroidissement.

Avec un autoclave d'une capacité de 1 litre, les Demandeurs ont pu obtenir des aérogels de silice monolithiques de forme cylindrique d'un diamètre de 28 mm et d'une hauteur de 230 mm.

Ces aérogels présentent une texture assez développée, une surface spécifique atteignant plusieurs centaines de $m^2/g$ (typiquement de l'ordre de 250 à 450 $m^2/g$), un volume poreux élevé (typiquement de 2,5 à 5 $cm^3/g$), et une très faible densité (typiquement de 0,18 à 0,35 $g/cm^3$) qui est fonction de la concentration en composé du silicium du mélange gélifiant. La composition chimique de ces aérogels répond à une formule $SiO_x(OH)_y(OR)_z$. La teneur en carbone des aérogels est de l'ordre de quelques pourcents, typiquement de l'ordre de 4 à 5% en poids. Les aérogels obtenus présentent un caractère hydrophobe dû à la présence de groupements Si–O–R où R est un radical organique.

Ces aérogels de silice monolithiques qui sont exempts de fissures ou craquelures, se sont révélés particulièrement intéressants pour la fabrication d'articles en verre de silice. Il suffit, en effet, de consolider ces aérogels monolithiques en les chauffant progressivement jusqu'à une température dans la gamme de 1120 à 1300 °C avec observation évenutelle de palier(s) entre 300 et 950 °C. Pendant la consolidation, les aérogels se compactent de façon isotrope. Au cours du chauffage, ils deviennent complètement transparents vers 1120 °C où ils possèdent déjà une densité qui est de 99,7% de la densité (2,20 $g/cm^3$) de la silice vitreuse obtenue par la voie classique, puis atteignent la densité de la silice vitreuse par poursuite du chauffage à plus haute température. La température de densification totale est variable suivant la teneur résiduelle en groupes –OH et le degré de porosité de l'aérogel, lequel est fonction de la teneur en composé du silicium de la solution de départ, la porosité étant d'autant plus grande que cette teneur est basse ainsi que cela est compréhensible. Aucun retrait substantiel du gel n'est observé avant 950 °C.

Les aérogels de l'invention permettent ainsi de produire dans des conditions particulièrement économiques des corps ou articles en verre de silice. En effet, on peut se contenter d'un chauffage de consolidation à une température dans la gamme de 1120 à 1300 °C, de préférence de 1120 à 1250 °C, au lieu d'avoir à fondre de la silice, ce qui nécessite des températures de l'ordre de 2000 °C. Il faut veiller à ne pas dépasser une température de 1300 °C lors de la consolidation sous peine de provoquer une cristallisation du verre de silice. C'est la raison pour laquelle il n'est pratiquement pas possible d'utiliser des monolithes d'aérogels préparés à partir de solution de départ contenant moins de 40% en volume de composé du silicium car ces monolithes sont extrêmement poreux et nécessitent pour leur consolidation des températures plus élevées, dépassant 1300 °C, avec pour résultat l'obtention d'un verre cristallisé dénué d'intérêt.

Comme les aérogels de l'invention contiennent des groupements organiques –OR et une quantité relativement importante (typiquement 6 à 10% en poids) d'eau (principalement sous forme de groupes –OH), il est avantageux d'opérer le chauffage en plusieurs étapes afin d'éliminer aussi complètement que possible ces groupements organiques et cette eau lors du traitement de consolidation. En particulier, les groupes –OH qui se trouveraient emprisonnés dans le verre de silice final, pourraient affecter un grand nombre de propriétés dudit verre si la teneur en eau résiduelle était trop importante. Il faut donc que le chauffage de consolidation s'effectue lentement (5 à 48 heures par exemple) avec de préférence un maintien de 2 à 15 heures dans l'intervalle de températures allant de 300 à 650 °C sous atmosphère d'oxygène ou d'air pour éliminer les groupes organiques et optionnellement observation d'au moins un palier de quelques heures par exemple 2 à 15 heures dans la gamme de températures de 800 à 950 °C pour éliminer le plus d'eau possible, cette dernière température correspondant au début de l'écoulement visqueux de l'aérogel.

D'autres moyens pourraient être employés pour réduire la teneur en groupes –OH, citons à titre d'exemples la mise des aérogels sous vide secondaire avant de les consolider ou encore l'emploi d'une atmosphère desséchante (chlore ou autre) pendant la consolidation.

Les verres de silice produits peuvent être travaillés au chalumeau lorsque leur teneur en groupes –OH n'excède pas 1500 ppm environ.

Les verres de silice produits à partir des aérogels de l'invention ont une très bonne qualité optique et ne se différencient en rien macroscopiquement d'un verre de silice fabriqué par la voie classique.

On peut, par exemple, produire à partir d'un cylindre d'aérogel monolithique un cylindre de verre de silice de taille évidemment plus petite que celle de l'aérogel de départ et à partir duquel on peut élaborer, par exemple, des lentilles.

On pourrait aussi former des revêtements de verre de silice sur des substrats.

Une autre utilité des monolithes d'aérogels de l'invention est la préparation de matériaux thermiquement isolants.

A cette fin, il suffit de soumettre le monolithe à un chauffage rapide à haute température (1200–1300 °C environ) afin de fermer prématurément la porosité superficielle du monolithe et d'emprisonner les produits d'oxydation des groupements organiques lesquels jouent le rôle d'un agent porogène. On peut obtenir ainsi un matériau expansé présentant une surface vitrifiée étanche et un cœur poreux dont la densité peut varier entre 0,3 et 2,2.

Les exemples non limitatifs suivants sont donnés en vue d'illustrer l'invention.

EXEMPLE 1:

Préparation d'un aérogel de silice monolithique en milieu neutre.

A 38 $cm^3$ de tétraméthoxysilane ($Si(OCH_3)_4$) sont ajoutés 25,4 $cm^3$ de méthanol ($CH_3OH$) pur. Le mélange est agité pendant 10 minutes. Les quantités utilisées correspondent à 60% en volume de $Si(OCH_3)_4$ dans le $CH_3OH$.

L'hydrolyse du tétraméthoxysilane s'effectue sous agitation continue par ajout de 21,6 $cm^3$ d'eau distillée (quantité légèrement supérieure à la quantité stoechiométrique d'après la réaction (1)).

$$Si(OCH_3)_4 + 4H_2O \rightarrow Si(OH)_4 + 4CH_3OH \quad (1)$$

La durée de l'hydrolyse est de 15 minutes. La solution obtenue est transvasée dans un tube en verre Pyrex® (∅ : 21,5 m/h : 250 mm) et mise dans un autoclave dont la capacité totale est de 1000 $cm^3$. On ajoute aussi à l'autoclave 250 $cm^3$ de méthanol pur pour pouvoir atteindre les conditions hypercritiques requises ($V_m$ = 3,93 $cm^3g^{-1}$; % $H_2O$:8,10).

L'autoclave est chauffé à raison de 100 °C/h. Lorsque la température atteint 270 °C, on procède à une évacuation lente du solvant. La durée de l'évacuation est de 2 heures. L'évacuation terminée, on purge plusieurs fois l'autoclave avec un gaz sec (argon) pendant 15 minutes.

L'aérogel de silice est retiré après refroidissement de l'autoclave jusqu'à la température ambiante.

L'aérogel se présente sous forme d'un barreau cylindrique monolithique légèrement opaque.

On prépare de la même façon un aérogel de silice si ce n'est que les quantités de départ correspondent à 50% en volume de $Si(OCH_3)_4$ dans le $CH_3OH$. On obtient également un barreau cylindrique monolithique légèrement opaque d'aérogel.

On confère à ces deux aérogels les désignations A60 et A50, respectivement.

EXEMPLE 2:

Préparation d'un aérogel de silice monolithique en milieu neutre.

A 35,1 $cm^3$ de tétraméthoxysilane sont ajoutés 15 cc de méthanol pur. Le mélange est agité pendant 10 minutes. Les quantités utilisées correspondent à 70% en volume de $Si(OCH_3)_4$ dans $CH_3OH$. L'hydrolyse du tétraméthoxysilane s'effectue sous agitation continue par ajout de 19,9 $cm^3$ d'eau distillée (quantité légèrement supérieure à la quantité stoechiométrique d'après la réaction (1)). Lorsque toute l'eau a été ajoutée à la solution de $Si(OCH_3)_4$ dans le $CH_3OH$, il y a formation de deux phases non miscibles. La miscibilité du mélange est obtenue par agitation et chauffage pendant 1 heure environ à 30–40 °C. Après que le mélange soit devenu homogène, on procède de la même façon que dans l'exemple 1. L'aérogel obtenu est monolithique et légèrement transparent. On leur confère la désignation A 70.

Le tableau ci-dessous récapitule les propriétés des aérogels des exemples 1 et 2.

Tableau
Propriétés texturales des GM à différents % volumiques en $Si(OCH_3)_4$

| Gel | Masse spécifique Pa ($gcm^{-3}$) | Surface spécifique Sp ($m^2g^{-1}$) | Volume spécifique Vp ($cm^3g^{-1}$) | Porosité P (%) | $\bar{R}_{po}$(Å) | $\bar{R}_{pa}$(Å) |
|---|---|---|---|---|---|---|
| A50 | 0,194 | 358 | 4,7 | 91,3 | 262 | 38 |
| A60 | 0,255 | 369 | 3,4 | 88,5 | 184 | 37 |
| A70 | 0,280 | 384 | 3,1 | 87,4 | 161 | 35 |

EXEMPLE 3:

Préparation d'un aérogel de silice monolithique en milieu ammoniacal.

On suit le mode opératoire décrit à l'exemple 1 si ce n'est que l'hydrolyse du mélange est effectuée avec une solution de 0,01 N $NH_4OH$. En outre, comme la gélification est accélérée à température ambiante par l'ajout de l'ammoniaque, on effectue le mélange et l'hydrolyse à 0 °C.

Les étapes suivantes sont identiques à celles décrites dans l'exemple 1. Le gel obtenu est monolithique et transparent. Ses propriétés sont les suivantes:

| $p_a$($gcm^{-3}$) | $S_p$($m^2g^{-1}$) | $V_p$($cm^3g^{-1}$) | P (%) | $\bar{R}_{po}$(Å) | $\bar{R}p_a$(Å) |
|---|---|---|---|---|---|
| 0,232 | 320 | 3,86 | 89,5 | 241 | 42 |

EXEMPLE 4:

Cet exemple est donné en vue d'illustrer le caractère critique de la condition concernant le volume massique $V_M$.

Un mélange gélifiant est préparé comme dans l'exemple 1 est mis à l'autoclave avec 150 $cm^3$ de méthanol additionnel ($V_M$ = 6,50 $cm^3g^{-1}$; %$H_2O$ 9,77). La vitesse de chauffe de l'autoclave est de 100 °C/h. A la température de l'évacuation 270 °C la pression est égale à 145 bars, soit une valeur nettement supérieure aux valeurs critiques du solvant. L'évacuation du solvant s'effectue de la même manière que dans l'exemple 1. L'aérogel obtenu dans ce cas se présente sous la forme d'un

barreau cylindrique légèrement opaque comportant un certain nombre de petites craquelures.

Le même résultat est obtenu pour toute température d'évacuation comprise entre 260–290 °C.

On effectue un autre essai similaire, si ce n'est que l'on n'introduit dans l'autoclave que 100 $cm^3$ de méthanol additionnel ($V_M = 9{,}70\ cm^3g^{-1}$). Dans ce cas, on obtient un barreau comportant de très importantes craquelures.

EXEMPLE 5:

Préparation d'un aérogel de silice monolithique avec vieillissement préalable du gel.

A 20 $cm^3$ de tétraméthoxysilane sont ajoutés 13,4 $cm^3$ de méthanol pur. Le mélange est agité pendant 10 minutes. Les quantités utilisées correspondent à 60% en volume de $Si(OCH_3)_4$ dans le $CH_3OH$. L'hydrolyse de tétraméthoxysilane est effectuée sous agitation continue par ajout de 9,8 $cm^3$ d'eau distillée. La durée de l'hydrolyse est de 30 mn. La solution finale est transvasée dans un tube en matière anti-adhérente (par exemple en polytétrafluoroéthylène ou en polyéthylène) et à fermeture étanche, et chauffée à 50 °C. La gélification (prise en masse) de la solution n'intervient que 15 heures après. Le gel est ensuite vieilli à la même température pendant 450 heures. A la fin du vieillissement, le gel se présente sous la forme d'un barreau cylindrique de coloration bleuâtre et transparent. On procède ensuite à l'évacuation du solvant dans l'autoclave de la manière décrite dans l'exemple 1. Le gel après séchage est monolithique, de coloration bleuâtre, et est beaucoup plus dense que celui préparé dans l'exemple 1.

EXEMPLE 6:

Cet exemple illustre l'influence du rapport

$$r = \frac{\text{nombre de moles de } H_2O \text{ utilisées}}{\text{nombre de moles de } Si(OCH_3)_4}$$

sur la monolithicité des aérogels obtenus à partir de solutions méthanoliques de départ contenant divers pourcentages en volume de $Si(OCH_3)_4$.

Le mode opératoire général est celui de l'exemple 1 à l'exception des modifications indiquées dans le tableau suivant qui récapitule les données et les résultats obtenus.

On voit que pour les aérogels préparés à partir de mélanges gélifiables de départ contenant une concentration de $Si(OCH_3)_4$ de l'ordre de 40 à 50% en volume, tous les aérogels obtenus avec une proportion d'eau de 4 à 6 moles/mole sont monolithiques. On pense que la limite inférieure peut descendre au moins jusqu'à 2,5 moles/mole puisqu'on a obtenu un aérogel satisfaisant avec cette proportion d'eau pour une concentration de $Si(OCH_3)_4$ égale à 60% en volume. En ce qui concerne la limite supérieure, elle est simplement liée à l'apparition d'immiscibilité dans le mélange. Pour des concentrations plus élevées, de l'ordre de 60% en volume, des problèmes d'immiscibilité apparaissent lorsque r atteint 5. Pour les concentrations encore plus élevées de 70–80% en volume, il n'est plus possible d'obtenir des monolithes dans les conditions opératoires normales en raison des problèmes d'immiscibilité. Pour pallier ceci, il faut chauffer les mélanges gélifiables à 40–60 °C pendant ½ heure à 1 heure sous agitation. Une autre possibilité est d'effectuer l'hydrolyse, sans chauffage, par une solution d'ammoniac 0,001 à 0,005 N.

EXEMPLE 7:

Cet exemple décrit la préparation d'un aérogel mixte $SiO_2$–$B_2O_3$ monolithique contenant 5 moles% de $B_2O_3$.

49,1 $cm^3$ (68% en volume) de tétraméthoxysilane $Si(OCH_3)_4$ sont mélangés avec 22,8 $cm^3$ de méthanol pur. Après homogénéisation du mélange nous effectuons l'hydrolyse et la polycondensation de l'organométallique avec 26 $cm^3$ de $H_2O$ distillée, quantité qui correspond à la quantité stoechiométrique de l'hydrolyse du mélange $Si(OCH_3)_4 + B(OCH_3)_3$, c'est-à-dire 4 moles d'eau/mole de $Si(OCH_3)_4$ + 3 moles d'eau/mole de $B(OCH_3)_3$. La réacticn est effectuée sous agitation du mélange pendant une heure et ce n'est qu'à ce moment que 4,10 $cm^3$ de $B(OCH_3)_3$ sont ajoutés au mélange. L'agitation est poursuivie pendant 1 heure supplémentaire à la température ambiante (22–25 °C).

Le mélange final est transvasé dans des tubes en verre à fermeture étanche. Après un vieillissement du gel de 100 h à 47 °C à l'étuve, les échantillons sont recouverts d'un peu de méthanol pur. Ils sont alors introduits dans l'autoclave. Pour le séchage hypercritique nous utilisons une quantité d'alcool qui est, pour l'autoclave de 1000 $cm^3$ utilisé, égale à 260 $cm^3$. La vitesse de chauffe de l'autoclave est 1,6 °C/min. L'évacuation du solvant débute à 270 °C et sa durée est de 2 heures. Après évacuation complète l'autoclave est purgé par un gaz sec qui peut être $N_2$ ou Ar. L'aérogel est retiré de l'autoclave après refroidissement. Il se présente sous la forme d'un barreau cylindrique sans craquelures. Il est transparent et légèrement bleuté.

Un aérogel monolithique à 5 moles % en $B_2O_3$ a été obtenu aussi dans le cas où la dilution de $Si(OCH_3)_4$ dans le méthanol était de 40% en volume. Dans ce cas, le temps de vieillissement était de 120 heures environ.

EXEMPLE 8:

Cet exemple décrit la préparation d'un aérogel mixte $SiO_2$–$TiO_2$ monolithique contenant 10 moles % de $TiO_2$.

113,6 $cm^3$ de tétraéthoxysilane $Si(OC_2H_5)_4$ sont mélangés avec 30 $cm^3$ de $C_2H_5OH$ et 91,8 g d'une solution éthanolique de $Ti(OC_2H_5)_4$ acidifiée avec 4 $cm^3$ de HCl concentré. Le mélange est agité pendant ½ heure. L'hydrolyse est effectuée avec 36 $cm^3$ d'eau distillée à température ambiante sous agitation continue pendant ½ heures. Après l'hydrolyse le mélange est transvasé dans des tubes à fermeture étanche et mis à l'étuve à 50 °C. Après 9 jours de vieillissement le gel est placé dans l'autoclave après avoir été recouvert avec un peu d'éthanol; 310 $cm^3$ d'éthanol pur sont placés dans l'autoclave. L'évacuation du solvant s'effec-

Tableau

| % en volume de $Si(OCH_3)_4$ | r | $V_M$, $cm^3g^{-1}$ | % en poids de $H_2O$ dans le gel | Température d'évacuation du solvant | Aspect de l'aérogel | Monolithicité | Remarques |
|---|---|---|---|---|---|---|---|
| 40 | 4,65 | 3,05 | 8,3 | 275 | LTB | M | |
| 40 | 6 | 3,05 | 8,3 | 275 | LTB | M | |
| 50 | 4 | 3,27 | 10,6 | 268 | LTB | M | |
| 50 | 4,65 | 3,40 | 11,4 | 275 | BO | M | |
| 50 | 6 | 3,27 | 10,6 | 268 | LTB | M | |
| 60 | 2,5 | 3,40 | 10 | 268 | LTB | M | |
| 60 | 3 | 3,40 | 10 | 268 | LTB | M | |
| 60 | 4,65 | 3,40 | 10 | 268 | LTB | M | |
| 60 | 5 | 3,40 | 10 | 268 | LTB | M | immiscibilité initiale des mélanges. Nécessité d'une homogénéisation par chauffage à 40° |
| 60 | 5 | 3,40 | 11,2 | 270 | LTB+BO | hétérogène | mélange initial sans chauffage |
| 60 | 5,5 | 3,40 | 11,2 | 270 | LTB+BO | hétérogène | mélange initial sans chauffage |
| 60 | 6 | 3,40 | 11,7 | 268 | LTB+BO | hétérogène | mélange initial sans chauffage |
| 70 | 3 | 3,60 | 9,76 | 272 | LTB | hétérogène | mélange initial sans chauffage |
| 70 | 3 | 3,60 | 9,76 | 270 | LTB | M | hydrolyse par 0,005N $NH_4OH$ pas de chauffage |
| 70 | 4,65 | 4,32 | 8,06 | 273 | LTB | M | chauffage d'une heure à 40°C |
| 70 | 4 | 3,60 | 9,76 | 270 | TB | M (quelques craquelures en bas du tube) | hydrolyse par 0,005N $NH_4OH$ pas de chauffage |
| 80 | 2 | 3,5 | 7 | 275 | BO | C | *** |
| 80 | 2,5 | 3,5 | 7 | 275 | BO | C | *** |

***mélange initial porté à 40°C sous agitation jusqu'à homogénéisation. Gel résultant dur

Signification des abréviations:
TB: transparent, bleuâtre
LTB: légèrement transparent, bleuâtre
BO: blanc, opaque
M: monolithique
C: craquelé.

tue à 280 °C et elle dure 2 heures environ. A la fin de l'évacuation, l'autoclave est purgé comme précédemment. L'aérogel retiré de l'autoclave est monolithique, opaque et présente un aspect laiteux.

EXEMPLE 9:

Cet exemple illustre la conversion d'un aérogel de silice monolithique en un verre de silice.

L'aérogel de silice préparé à l'exemple 1 est densifié en un verre selon le traitement thermique suivant.

L'aérogel est chauffé à raison de 50 °C/h jusqu'à 650 °C, température à laquelle l'aérogel ne présente qu'un retrait très faible (1 à 2%). Ce traitement thermique, qui a pour but d'éliminer toute trace des groupements organiques, est effectué à la pression atmosphérique et pendant 10 heures. L'aérogel est ensuite chauffé à la même vitesse de chauffe jusqu'à 1160 °C. Après 30 minutes à cette température, le matériau est complètement transparent et possède une densité qui est de 99,5% de la densité (2,20 $g/cm^3$) de la silice vitreuse obtenue par la voie classique. Le même aérogel peut être densifié en un verre de silice par chauffage à raison de 300 °C/h. Dans ce cas, le matériau possède une densité égale à 2,2 $g/cm^3$ à la température de 1175 °C.

EXEMPLE 10:

Cet exemple illustre aussi la conversion d'un aérogel de silice monolithique en un verre de silice, mais en suivant un traitement thermique programmé différent.

Selon cette variante, on chauffe l'aérogel de l'exemple 1 à raison de 50 °C/h à 500 °C, température à laquelle le gel est maintenu pendant 15 heures. Ce traitement s'effectue à atmosphère ambiante.

Le gel est porté ensuite à 950 °C sous vide primaire à la même vitesse de chauffe et maintenu à cette température pendant ½ heure. Le matériau est densifié sous vide à 1215 °C pendant 10 minutes, après avoir subi deux traitements isothermes à 1050 et 1180 °C pendant 10 minutes. Le matériau obtenu présente une densité de 2,2 $g/cm^3$ et possède des propriétés physiques et mécaniques similaires à celles d'une silice vitreuse obtenue par la voie classique.

EXEMPLE 11:

Cet exemple illustre la conversion d'un aérogel de silice monolithique selon l'invention en un matériau thermiquement isolant en silice expansée.

Un aérogel de silice obtenu comme à l'exemple 1 est soumis à une chauffe rapide sous vide ($10^{-1}$ mm de Hg) de façon à emprisonner les produits d'oxydation des groupements organiques à l'intérieur du matériau. Cela s'effectue par densification de la surface et fermeture prématurée des pores qui débouchent à la surface. La température finale est de 1280 °C. Le matériau possède la même géométrie que l'aérogel de départ, mais son volume est augmenté d'au moins 1,5 fois le volume initial. Il est blanc et opaque, il possède une très bonne résistance mécanique. Sa densité est égale à 0,3 $g/cm^3$. La porosité est entièrement fermée. De ce fait le matériau ainsi obtenu constitue un très bon isolant thermique.

**Revendications**

1. Procédé de préparation d'un aérogel de silice qui est monolithique, exempt de fissures et craquelures et a au moins une de ses dimensions qui est supérieure à 10 cm, selon lequel on ajoute à un composé du silicium hydrolysable une quantité d'un solvant non aqueux et une quantité d'eau de façon à obtenir une solution, la quantité d'eau étant suffisante pour hydrolyser et polycondenser ledit composé en un gel, le composé du silicium étant présent à raison d'au moins 40% en volume par rapport au total composé du silicium plus solvant non aqueux, on soumet l'ensemble, placé dans un récipient de la forme voulue, dans un autoclave contenant une quantité additionnelle du solvant non aqueux utilisé pour former la solution, à des conditions de température et de pression telles que le point critique du solvant de la solution restante après gélification soit dépassé et sans qu'à aucun moment la courbe d'équilibre liquide/vapeur du solvant soit coupée, puis on élimine le solvant et l'eau résiduelle éventuelle présents afin d'obtenir un aérogel de silice, caractérisé en ce que:

a) la solution de composé du silicium hydrolysable dans le mélange d'eau et de solvant non aqueux est homogène;

b) on opère le traitement en autoclave sans élimination préalable d'eau à partir du gel;

c) on chauffe l'autoclave à une vitesse d'au moins 50 °C/heure à une température supérieure à la température critique et une fois la température maximale désirée atteinte, on procède, dans des conditions sensiblement isothermiques, à l'évacuation du solvant en une période de 5 heures au plus; et

d) après le retour de l'autoclave à la pression atmosphérique, on purge le solvant résiduel de l'autoclave, on arrête de chauffer l'autoclave et on enlève l'aérogel de l'autoclave après refroidissement.

2. Procédé selon la revendication 1, dans lequel le composé du silicium est du tétraméthoxysilane et le solvant de la solution non aqueuse est du méthanol, caractérisé en ce que:

– on opère l'hydrolyse avec une quantité d'eau représentant au plus 1,5 fois la quantité stoechiométrique;

– on porte l'autoclave à une température dans la gamme de 265 à 275 °C et à une pression de l'ordre de 180 à 200 bars; et

– on opère le traitement à l'autoclave dans des conditions telles que le volume massique $V_M$ soit inférieur à 6,5 $cm^3g^{-1}$, où

$$V_M = \frac{\text{volume utile interne de l'autoclave dans les conditions critiques}}{\text{masse de solvant additionnel + masse de solvant dans le gel}}$$

3. Procédé selon la revendication 2, caractérisé en ce que

– on opère l'hydrolyse avec une quantité d'eau comprise entre 1 et 1,25 fois la quantité stoechiométrique;

– on chauffe l'autoclave à une vitesse d'au moins 100 °C/heure;

– on procède à l'évacuation du solvant en une période de 2 à 3 heures;

– le volume massique $V_M$ est compris entre 3 et 4 $cm^3g^{-1}$.

4. Procédé selon l'une quelconque des revendications 1 à 3, caractérisé en ce que, en plus du composé de silicium, est présent un alcoolate hydrolysable de bore, de titane ou d'aluminium.

5. Procédé selon l'une quelconque des revendications 1 à 4, caractérisé en ce qu'on effectue l'hydrolyse à l'aide d'une solution diluée de $NH_4OH$.

6. Procédé selon l'une quelconque des revendications 1 à 4, caractérisé en ce que, avant de soumettre le gel aux conditions hypercritiques, on lui fait subir un vieillissement de 1 à 1000 heures.

7. Aérogel monolithique de silice et d'au moins un autre oxyde minéral en quantité mineure, exempt de fissures et craquelures et dont au moins une de ses dimensions est supérieure à 10 cm, produit par un procédé selon la revendication 4.

8. Procédé selon la revendication 1, caractérisé en ce qu'il comprend, en outre, une étape de consolidation de l'aérogel obtenu par chauffage lent de ce dernier jusqu'à une température dans la gamme de 1120 à 1300°C, de manière à produire un corps ou article en verre de silice.

9. Procédé selon la revendication 8, caractérisé en ce qu'on effectue le chauffage en l'espace de 5 à 48 heures, avec un séjour de 2 à 20 heures dans l'intervalle de températures allant de 300 à 650 °C sous atmosphère d'oxygène ou d'air pour éliminer les groupes organiques résiduels, et, optionnellement, mise en œuvre d'un traitement desséchant pour éliminer la plus grande part des groupes –OH résiduels.

10. Procédé selon la revendication 1, caractérisé en ce qu'il comprend, en outre, une étape consistant à chauffer rapidement l'aérogel obtenu jusqu'à une température dans la gamme de 1200 à 1300 °C, de manière à produire un matériau thermiquement isolant.

## Claims

1. Process for the preparation of a silica aerogel which is monolithic and free of fissures and cracks and has at least one of its dimensions greater than 10 cm, in which process water and a non-aqueous solvent are added to a hydrolyzable silicon compound in such amounts that a solution is produced, the amount of water being sufficient to hydrolyze and polycondense said compound to form a gel, the silicon compound being present in an amount of at least 40% by volume, relative to the total of the silicon compound plus the non-aqueous solvent, the whole, placed in a container of the desired shape, is subjected, in an autoclave containing an additional amount of the non-aqueous solvent used to form the solution, to temperature and pressure conditions such that the critical point of the solvent of the solution remaining after gelling is exceeded, without the liquid/vapor equilibrium curve of the solvent being broken at any time, then the solvent and any residual water present are removed in order to obtain a silica aerogel, characterized in that:

a) the solution of the hydrolyzable silicon compound in the mixture of water and non-aqueous solvent is homogeneous;

b) the autoclave treatment is carried out without the prior removal of water from the gel;

c) the autoclave is heated at a rate of at least 50 °C/hour to a temperature above the critical temperature, and once the desired maximum temperature has been reached, the solvent is removed under substantially isothermal conditions, over a period of at most 5 hours; and

d) after the autoclave has returned to atmospheric pressure, the residual solvent is purged from the autoclave, the heating of the autoclave is stopped and the aerogel is withdrawn from the autoclave after cooling.

2. Process according to claim 1, in which the silicon compound is tetramethoxysilane and the solvent of the non-aqueous solution is methanol, characterized in that:

– the hydrolysis is carried out with an amount of water representing at most 1.5 times the stoichiometric amount;

– the autoclave is heated to a temperature within the range from 265 to 275 °C and brought to a pressure of the order of 180 to 200 bars; and

– the treatment in the autoclave is carried out under conditions such that the volume per unit mass, $V_M$, is less than 6.5 $cm^3\ g^{-1}$, in which

$$V_M = \frac{\text{Useful internal volume of the autoclave under the critical conditions}}{\text{Mass of additional solvent + mass of solvent in the gel}}$$

3. Process according to claim 2, characterized in that:

– the hydrolysis is carried out with an amount of water of between 1 and 1.25 times the stoichiometric amount;

– the autoclave is heated at a rate of at least 100 °C/hour;

– the solvent is removed over a period of 2 to 3 hours; and

– the volume per unit mass, $V_M$, is between 3 and 4 $cm^3\ g^{-1}$.

4. Process according to any of claims 1 to 3, characterized in that a hydrolyzable alcoholate of boron, titanium or aluminium is present in addition to the silicon compound.

5. Process according to any of claims 1 to 4, characterized in that the hydrolysis is carried out with the aid of a dilute solution of $NH_4OH$.

6. Process according to any of claims 1 to 4, characterized in that, bevore the gel is subjected to hypercritical conditions, it is subjected to ageing for 1 to 1000 hours.

7. Monolithic aerogel of silica and of at least a minor amount of an other inorganic oxide, which is free of fissures and cracks, and at least one of the dimensions of which is greater than 10 cm, produced by a process according to claim 4.

8. Process according to claim 1, characterized in that it further comprises a consolidation step of the obtained aerogel by slow heating of the latter up to a temperature within the range from 1120 to 1300 °C, so as to produce a body or article made of silica glass.

9. Process according to claim 8, characterized in that the heating is carried out over a period of 5 to 48 hours, with a holding time of 2 to 20 hours in the temperature range from 300 to 650 °C, under an atmosphere of oxygen or air, in order to remove the residual organic groups, and, optionally, with the use of a drying treatment in order to remove the most part of the residual –OH groups.

10. Process according to claim 1, characterized in that it further comprises a step consisting in the rapid heating of the obtained aerogel up to a temperature within the range from 1200 to 1300 °C, so as to produce a heat-insulating material.

**Patentansprüche**

1. Verfahren zum Herstellen von monolithischen Silika-Aerogelen, welche frei von Sprüngen und Rissen sind und in wenigstens einer Dimension eine Abmessung von mehr als 10 cm aufweist, bei welchem man zu einer hydrolysierbaren Siliciumverbindung eine Menge nichtwässrigen Lösungsmittels und eine Menge Wassers derart hinzugibt, dass eine Lösung erhalten wird, wobei die Wassermenge ausreicht, um die genannte Verbindung zu hydrolysieren und zu einem Gel zu polykondensieren, wobei die Siliciumverbindung in einem Verhältnis von wenigstens 40 Vol.-% bezogen auf die Gesamtmenge aus Siliciumverbindung und nichtwässrigem Lösungsmittel vorhanden ist, bei welchem man das Ganze in einem Behälter mit der gewünschten Form in einen Autoklaven einbringt, der eine zusätzliche Menge desjenigen nichtwässrigen Lösungsmittels enthält, welches zur Herstellung der Lösung verwendet wird, wobei in dem Autoklaven die Temperatur- und Druckbedingungen derart eingestellt werden, dass der kritische Punkt des Lösungsmittels der Lösung, die nach der Gelbildung verbleibt, überschritten wird und zu keinem Zeitpunkt die Gleichgewichtskurve Flüssigkeit/Dampf des Lösungsmittels geschnitten wird, und bei welchem man dann das vorhandene Lösungsmittel und etwa vorhandenes Restwasser eliminiert, um das Silika-Aerogel zu erhalten, dadurch gekennzeichnet, dass

a) die Lösung der hydrolysierbaren Siliciumverbindung und der Mischung aus Wasser und nichtwässrigem Lösungsmittel homogen ist;

b) die Behandlung im Autoklaven ohne vorheriges Eliminieren von Wasser ausgehend vom Gel erfolgt;

c) der Autoklav mit einer Geschwindigkeit auf eine über der kritischen Temperatur liegenden Temperatur aufgeheizt wird, die mindestens 50 °C/Stunde beträgt, und dass man nach Erreichen der gewünschten Maximaltemperatur unter im wesentlichen isothermischen Bedingungen das Abziehen des Lösungsmittels in einer Zeitspanne von maximal 5 Stunden durchführt; und

d) nach Rückkehren des Autoklaven auf atmosphärischen Druck die Lösungsmittelrestmenge aus dem Autoklaven herausgespült wird, das Heizen des Autoklaven beendet wird und das Aerogel nach Abkühlung aus dem Autoklaven entnommen wird.

2. Verfahren nach Anspruch 1, bei welchem die Siliciumverbindung Tetramethoxysilan ist und das nichtwässrige Lösungsmittel der Lösung Methanol ist, dadurch gekennzeichnet, dass

– die Hydrolyse mit einer Menge an Wasser durchgeführt wird, welche maximal das 1,5-fache der stöchiometrischen Menge beträgt;

– der Autoklav auf eine Temperatur im Bereich von 265 bis 275 °C und auf einen Druck im Bereich von 180 bis 200 bar gebracht wird; und

– die Behandlung im Autoklaven unter derartigen Bedingungen durchgeführt wird, dass das spezifische Volumen $V_M$ kleiner als 6,5 $cm^3\,g^{-1}$ ist, wobei gilt

$$V_M = \frac{\text{nutzbares Innenvolumen des Autoklaven bei kritischen Bedingungen}}{\text{Masse des zusätzlichen Lösungsmittels + Masse des im Gel enthaltenen Lösungsmittels.}}$$

3. Verfahren nach Anspruch 2, dadurch gekennzeichnet, dass

– die Hydrolyse mit einer Wassermenge durchgeführt wird, welche zwischen dem einfachen und dem 1,25-fachen der stöchiometrischen Menge liegt;

– dass der Autoklav mit einer Geschwindigkeit von mindestens 100 °C/Stunde aufgeheizt wird;

– dass das Abziehen des Lösungsmittels innerhalb einer Zeitspanne von 2 bis 3 Stunden durchgeführt wird;

– dass das spezifische Volumen $V_M$ zwischen 3 und 4 $cm^3 g^{-1}$ liegt.

4. Verfahren nach einem der Ansprüche 1–3, dadurch gekennzeichnet, dass zusätzlich zu der Siliciumverbindung ein hydrolysierbares Alkoholat von Bor, Titan oder Aluminium gegenwärtig ist.

5. Verfahren nach einem der Ansprüche 1–4, dadurch gekennzeichnet, dass die Hydrolyse mit Hilfe einer verdünnten Lösung von $NH_4OH$ durchgeführt wird.

6. Verfahren nach einem der Ansprüche 1–4, dadurch gekennzeichnet, dass das Gel, bevor es den überkritischen Bedingungen ausgesetzt wird, über eine Zeitspanne von 1 bis 1000 Stunden einen Alterungsprozess erfährt.

7. Monolithisches Aerogel aus Silika und mindestens einem in geringerer Menge vorhandenen anorganischen Oxid, welches frei von Rissen und Sprüngen ist und in mindestens einer Dimension eine Abmessung von mehr als 10 cm aufweist, hergestellt nach dem Verfahren nach Anspruch 4.

8. Verfahren nach Anspruch 1, dadurch gekennzeichnet, dass zusätzlich ein Kompaktierungsschritt des Aerogels durchgeführt wird, wozu man das Aerogel langsam auf eine Temperatur im Bereich von 1120 bis 1300 °C aufheizt, so dass man einen Körper oder Gegenstand aus Silikaglas erhält.

9. Verfahren nach Anspruch 8, dadurch gekennzeichnet, dass das Aufheizen in einem Zeitraum von 5 bis 48 Stunden durchgeführt wird, wobei man eine Verweildauer von 2 bis 20 Stunden in dem Temperaturbereich von 300 bis 650 °C unter Sauerstoffatmosphäre oder Luft einhält, um restliche organische Gruppen zu eliminieren, wobei wahlweise ein Trockenschritt durchgeführt wird, um den grössten Teil der restlichen OH-Gruppen zu entfernen.

10. Verfahren nach Anspruch 1, dadurch gekennzeichnet, dass zusätzlich ein Verfahrensschritt durchgeführt wird, in welchem das erhaltene Aerogel rasch auf eine Temperatur im Bereich von 1200 bis 1300 °C aufgeheizt wird, derart, dass man ein thermisch isolierendes Material erhält.